# NEUE EUROPÄISCHE PATENTSCHRIFT

(11) **EP 1 363 043 B2**
(45) Veröffentlichungstag und Bekanntmachung des Hinweises auf die Entscheidung über den Einspruch: **15.04.2009**
(45) Hinweis auf die Patenterteilung: 21.12.2005
(21) Anmeldenummer: 03010236.2
(22) Anmeldetag: 07.05.2003
(51) Int. Cl.: F16F 9/44

(54) **Dämpferventil mit definierter Vorspannkraft und Montageverfahren**
Damper valve with predetermined preload and method of assembling the same
Soupape d'amortisseur avec force de pré-contrainte et procédé de montage

(30) Priorität: 17.05.2002 DE 10222054
(43) Veröffentlichungstag der Anmeldung: 19.11.2003
(73) Patentinhaber: Volkswagen Aktiengesellschaft, 38436 Wolfsburg (DE)
(72) Erfinder: Zembok, Thomas, 38116 Braunschweig (DE); Hübbe, Matthias, 31275 Lehrte (DE); Reinbothe, Kai, 38116 Braunschweig (DE); Flotmann, Stefan, 30172 Hannover (DE); Baron, Joachim, Dr., 38120 Braunschweig (DE); Krause, Bodo, 31275 Lehrte (DE); Eberhardt, Torsten, 38120 Braunschweig (DE); Liebschwager, Ralf, 38154 Königslutter (DE)
(74) Vertreter: Beck, Michael Rudolf

(56) Entgegenhaltungen:
- EP-A- 1 199 492
- EP-A1- 1 199 492
- EP-B1- 0 662 200
- DE-C1- 19 855 974
- DE-C2- 4 315 458
- US-A- 2 655 233
- US-A- 4 971 181
- US-A1- 2001 032 763
- US-B1- 6 371 264

## Beschreibung

Die Erfindung bezieht sich auf ein Dämpferventil mit definierter Vorspannkraft nach dem Oberbegriff von Patentanspruch 1.

Dämpferventile der eingangs genannten Art werden in der Regel in Schwingungsdämpfer eingebaut, die ihrerseits wiederum in Radaufhängungen von Kraftfahrzeugen aber auch zu anderen Zwecken eingesetzt werden.

Um das Dämpfungsverhalten eines solchen Schwingungsdämpfers zu beeinflussen, sind im Stand der Technik eine Vielzahl von Maßnahmen bekannt, mit denen ein progressiver oder auch degressiver Dämpferkraftverlauf realisierbar ist. In jedem Fall besteht in großes Interesse daran, eine geringe Kennungsvarianz zu gewährleisten. Hierzu ist es unter anderem wichtig, das Öffnungsverhalten der in dem Dämpfer vorgesehenen Ventile möglichst präzise zu steuern. Üblicherweise sind die Dämpferventile mit einer definierten Vorspannkraft eingebaut. Kann diese genauer eingehalten werden, so läßt sich die Kennungsvarianz verbessern.

Die Einstellung der Vorspannkraft ist jedoch bei herkömmlichen Dämpferventilen schwierig, da die dort üblicherweise verwendeten Montageverfahren eine unmittelbare Feststellung der Vorspannkraft nicht oder nur unter großen Schwierigkeiten erlauben oder aufgrund herstellungstechnischer Besonderheiten eine feststellbare Vorspannkraft verfälscht wird.

Üblicherweise wird nämlich als Befestigungsorgan eine Mutter verwendet, die auf einen Wellenendabschnitt einer durch den Grundkörper geführten Kolbenstange aufgeschraubt wird. Mit dem Anziehen der Mutter wird die Verschlußeinrichtung vorgespannt. Die Definition der Vorspannkraft erfolgt dabei üblicherweise über das Anzugsmoment der Mutter. Unter anderem aufgrund der Gewindereibung ergeben sich jedoch verhältnismäßig große Fertigungsstreuungen, so daß sich die Vorspannkraft nicht mit einer ausreichenden Genauigkeit einstellen läßt, die für eine geringe Kennungsvarianz wünschenswert wäre. Ein derartiges, herkömmliches Dämpferventil ist beispielsweise aus der DE 42 23 673 C2 bekannt.

Prinzipiell besteht weiterhin die Möglichkeit, das Befestigungsorgan mit einem Sicherungsring oder einer Schweißverbindung festzulegen. In beiden Fällen ist zwar während der Aufbringung der Vorspannkraft eine verhältnismäßig genaue Feststellung derselben möglich. Es ergeben sich jedoch bei Verwendung eines Sicherungsrings aufgrund von Fertigungsungenauigkeiten und bei Verwendung einer Schweißverbindung aufgrund von Verzugserscheinungen je nach Einbausituation Beeinträchtigungen der Vorspannkraft.

Bei herkömmlicherweise ebenfalls verwendeten Nietverfahren kann es aufgrund der damit verbundenen hohen Umformkräfte zu einer Veränderung der Vorspannkraftwerte während der Vernietung kommen.

Ein Dämpferventil der eingangs genannten Art ist in der US 2,655,233 beschrieben. Bei diesem klemmt eine Mutter alle Komponenten einer Verschlusseinrichtung an einer Kolbenstange fest. Dabei ist der Innenrand der Ventilscheiben fest eingespannt, so daß diese lediglich an ihrem radialen Außenrand aufbiegen können. Das Schließverhalten wird durch eine Druckfeder bedingt, die auf den Außenrand der Ventilscheiben drückt.

Vor diesem Hintergrund liegt der Erfindung die Aufgabe zugrunde, ein Dämpferventil der eingangs genannten Art zu schaffen, das eine geringe Kennungsvarianz aufweist und das insbesondere den Aufbau einer definierten Vorspannkraft bei der Montage und deren nachfolgende Beibehaltung erlaubt.

Diese Aufgabe wird durch ein Dämpferventil mit den Merkmalen des Patentanspruches 1 gelöst.

Weitere, vorteilhafte Ausgestaltungen sind in den Patentansprüchen angegeben.

In einer vorteilhaften Ausgestaltung der Erfindung umfaßt die Verschlußeinrichtung einen Ventilteller, auf dem die Ventilscheibe bzw. Ventilscheiben angeordnet sind, wobei im Ruhezustand zwischen den Ventilscheiben und dem Ventilteller ein Öffnungsweg vorgesehen ist, der durch Anliegen eines bestimmten Strömungsdruckniveaus unter Durchbiegung der Ventilscheiben überwindbar ist. Über die Ventilscheiben läßt sich das Öffnungsverhalten des Dämpferventils sehr präzise steuern. Durch mehrere, aufeinandergestapelte Ventilscheiben und eine entsprechende Gestaltung derselben läßt sich außerdem eine Voröffnungsfunktion an dem Dämpferventil realisieren.

Der Ventilteller ist bevorzugt um einen weiteren Öffnungsweg axial verschiebbar. Zudem kann zwischen dem Ventilteller und dem Befestigungsorgan eine Druckfeder, insbesondere Schraubenfeder, eingegliedert sein.

Vorzugsweise ist das Befestigungsorgan als eine Ventilfedersitzmuffe ausgebildet, die einen radial abstehenden Kragen zur Abstützung der Druckfeder aufweist. Durch die Doppelfunktion des Befestigungsorgans bleibt die Anzahl der Bauteile gering.

In einer weiteren, vorteilhaften Ausgestaltung der Erfindung weisen die Ventilscheiben eine kleinere Federsteifigkeit auf als die Druckfeder, und zwar derart, daß zunächst ein Durchbiegen der Ventilscheiben in Richtung des Ventiltellers erfolgt, bevor eine merkliche axiale Verschiebung des Ventiltellers eintritt. Hierdurch läßt sich der Kennungsverlauf des Dämpferventils gezielt beeinflussen. Insbesondere kann das Verhalten des Dämpferventils im Moment der parallelen Ventilöffnung sehr präzise eingestellt werden, ohne daß dies den Öffnungszeitpunkt der zwischen dem Grundkörper und dem Ventilteller gespannten Ventilscheiben beeinflußt.

Bei dem erfindungsgemäßen Dämpferventil ist das Befestigungsorgan axial mit dem Grundkörper zusammengeschoben und mit einer lösbaren, radial kraftschlüssig wirkenden Verbindung relativ zu dem Grundkörper festgelegt. Damit wird gewährleistet, daß die beim Vorspannen der Verschlußeinrichtung festgestellte Vorspannkraft durch das Befestigungsorgan im wesentlichen verfälschungsfrei aufrechterhalten wird. Die kraftschlüssige Verbindung erweist sich hierbei als gegenüber einer formschlüssigen Verbindung oder Schweißverbindung überlegen. Durch die Lösbarkeit kann notfalls eine Korrektur der Vorspannkraft veranlaßt werden. Das vorstehend erläuterte Dämpferventil läßt sich wie folgt montieren. Hierzu werden zunächst der Grundkörper, die Verschlußeinrichtung und das Befestigungsorgan weitestgehend axialkraftfrei aufeinandergesteckt. Anschließend wird das Befestigungsorgan unter Druckvorspannung der Verschlußeinrichtung in Richtung des Grundkörpers gedrückt. Hernach wird unter Beibehaltung der Druckkraft das Befestigungsorgan radial kraftschlüssig relativ zu dem Grundkörper festgelegt.

In einer vorteilhaften Ausgestaltung ist das Befestigungsorgan als Ventilfedersitzmuffe ausgebildet, welche unter Kompression einer zwischen dieser und der Verschlußeinrichtung angeordneten Druckfeder auf eine Ventilführung des Grundkörpers aufgeschoben wird.

Nachfolgend wird die Erfindung anhand eines in der Zeichnung dargestellten Ausführungsbeispiels näher erläutert. Die Zeichnung zeigt in:
- Figur 1: ein Ausführungsbeispiel für ein Dämpferventil nach der Erfindung in einer Schnittansicht, und in
- Figur 2: eine Detailansicht der Verschlußeinrichtung und des Befestigungsorgans des Dämpferventils nach Figur 1.

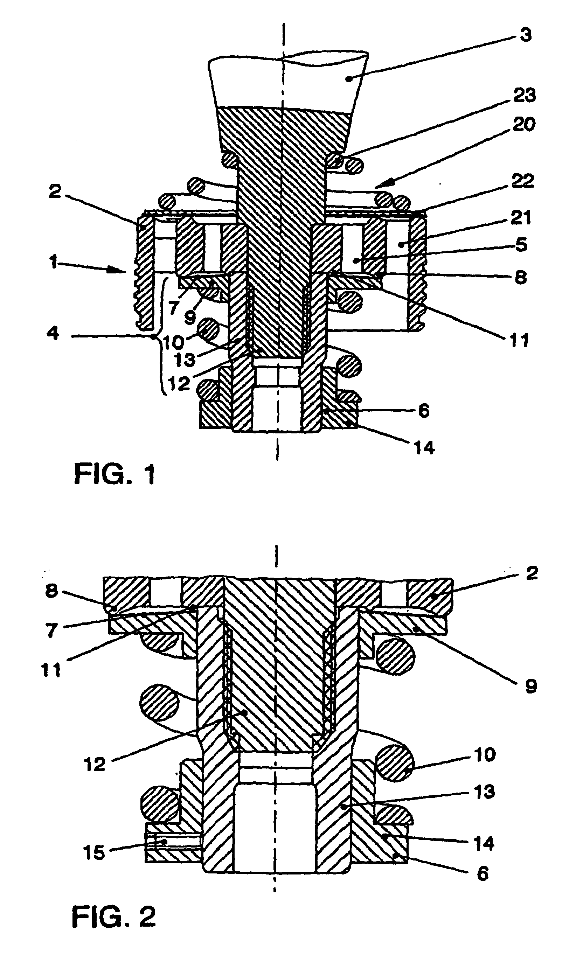

Das in den Figuren 1 und 2 abgebildete Ausführungsbeispiel zeigt ein Dämpferventil 1 in Form eines Kolbenventils für einen Schwingungsdämpfer einer Kraftfahrzeug-Radaufhängung. Das Dämpferventil 1 trennt zwei nicht näher dargestellte Arbeitskammem des Schwingungsdämpfers, die über weitere Verschlußeinrichtungen und Überströmkanäle miteinander verbunden sein können. Es ist hier als Einrichtungsventil ausgebildet, das bei einer Druckbeaufschlagung in einer Richtung öffnet, in Gegenrichtung jedoch bis auf einen gegebenenfalls vorhandenen Voröffnungsquerschnitt sperrt.

Das Dämpferventil 1 weist einen Grundkörper 2 auf, der hier beispielhaft als Folienkolben ausgebildet ist und sich gegen eine Schulter einer Kolbenstange 3 abstützt. Weiterhin weist das Dämpferventil 1 eine an dem Grundkörper 2 vorgesehene, federelastische Verschlußeinrichtung 4 auf, die im dargestellten Ruhezustand einen Strömungsweg 5 durch den Grundkörper 2 absperrt. Außerdem ist ein Befestigungsorgan 6 vorgesehen, das an dem Grundkörper 2 festgelegt ist und die Verschlußeinrichtung 4 gegen den Grundkörper 2 unter einer definierten Vorspannung hält.

Die Verschlußeinrichtung 4 besitzt hier unter anderen ein kompaktes Paket aus einer Vielzahl von dünnwandigen Ventilscheiben 7, die in der Art von Tellerfedern vorzugsweise ohne Zwischenräume flach aufeinander liegen. Bei dem dargestellten Ausführungsbeispiel weisen sämtliche Ventilscheiben 7 etwa die gleichen Abmessungen auf. Möglich ist es jedoch auch, unter den Ventilscheiben 7 eine Abstufung des Außendurchmessers und/oder der Materialdicke vorzunehmen. Weiterhin können an den Ventilscheiben 7 zusätzliche Öffnungen vorgesehen werden, welche bei einem Auffächern des Ventilscheibenpakets infolge einer Öffnungsbewegung eine Vergrößerung des Überströmquerschnitts bewirken.

Das Ventilscheibenpaket ist mit einer Seite gegen einen an dem Grundkörper 2 ausgebildeten Ventilsitz 8 vorgespannt und stützt sich mit seiner anderen Seite auf einem Ventilteller 9 der Verschlußeinrichtung 4 ab. Dabei ist zwischen den Ventilscheiben 7 und dem Ventilteller 9 im Ruhezustand ein Öffnungsweg vorgesehen. Liegt ein bestimmtes Strömungsdruckniveau an den Ventilscheiben 7 an, so heben diese von dem Ventilsitz 8 ab und biegen sich durch, bis sie in vollständige Anlage gegen den Ventilteller 9 gelangen.

Der Ventilteller 9 ist um einen weiteren Öffnungsweg axial verschiebbar an dem Grundkörper 2 gehalten. Eine Druckfeder 10 der Verschlußeinrichtung 4 sitzt zwischen dem Ventilteller 9 und dem Befestigungsorgan 6. Die Druckfeder 10 ist hier als Zylinderschraubenfeder ausgebildet und in Reihe zu den Ventilscheiben 7 geschaltet.

Wie Figur 1 zeigt, stützen sich das Ventilscheibenpaket und der Ventilteller 9 mit einem radial innenliegenden Abschnitt axial an einem Absatz 11 des Grundkörpers 2 ab und sind gegen diesen mittels der Druckfeder 10 verspannt.

Dabei ist die Federsteifigkeit der Ventilscheiben 7 und der Druckfedern 10 derart aufeinander abgestimmt, daß bei Anliegen eines Strömungsdrucks zunächst ein Durchbiegen der Ventilscheiben 7 in Richtung des Ventiltellers 9 erfolgt, bevor eine merkliche axiale Verschiebung des Ventiltellers 9 sowie eine damit verbundene Parallelverschiebung der Ventilscheiben 7 unter Verformung der Druckfeder 10 eintritt.

Anders ausgedrückt werden die Ventilscheiben 7 durch ihre Vorspannung einer Verformung ähnlich einer Tellerfeder unterzogen. Beim Öffnen des Ventils können sich die Ventilscheiben bis zum Anschlag gegen den Ventilteller 9 durchbiegen. Anschließend werden sie parallel gegen die Druckfeder 10 verschoben.

Zur Erzielung einer definierten, genau einhaltbaren Vorspannkraft wird das Befestigungsorgan 6 in besonderer Art und Weise an dem Grundkörper 2 befestigt. Wesentlich ist hierbei die weitestgehend axialkraftfreie Zusammenführung des Grundkörpers 2, der Verschlußeinrichtung 4 sowie des Befestigungsorgans 6. Zu diesem Zweck ist das Befestigungsorgan 6 so ausgebildet, daß dieses axial auf den Grundkörper 2 geschoben werden kann. Die bei einer Vorspannung auf das Befestigungsorgan 6 einwirkenden Kräfte entsprechen dadurch mit verhältnismäßig hoher Genauigkeit der tatsächlich in die Verschlußeinrichtung 4 eingebrachten Vorspannkraft.

Nach dem nahezu axialkraftfreien Zusammenstecken des Grundkörpers 2, der Verschlußeinrichtung 4 und des Befestigungsorgans 6 wird das Befestigungsorgan 6 unter Druckvorspannung der Verschlußeinrichtung 4 mit dem Grundkörper 2 zusammengedrückt. Unter Beibehaltung der Druckkraft wird dann das Befestigungsorgan 6 radial kraftschlüssig an dem Grundkörper 2 festgelegt.

Die hierzu vorgesehene, radial kraftschlüssig wirkende Verbindung ist lösbar ausgebildet. Diese besteht beispielsweise aus einer radial wirkenden Klemmschraube 15 oder aus einer entsprechend radial wirkenden Klemmeinrichtung. Möglich sind weiterhin Keilprofilverbindungen, wie sie beispielsweise aus der DE 42 09 153 C2 bekannt sind.

Bei dem hier dargestellten Ausführungsbeispiel ist das Befestigungsorgan 6 als Ventilfedersitzmuffe für die Druckfeder 10 ausgebildet. Diese Ventilfedersitzmuffe kann unmittelbar auf einen sich durch den Grundkörper 2 hindurch erstreckenden Endabschnitt 12 der Kolbenstange 3 aufgesteckt und dort befestigt sein. Wie die Figuren 1 und 2 zeigen, ist hier jedoch eine Zwischenbuchse 13 vorgesehen, welche dazu dient, den Grundkörper 2 gegen die Schulter der Kolbenstange 13 zu verspannen sowie eine axiale Ventilführung insbesondere für den Ventilteller 9 auszubilden. Somit ist die Zwischenbuchse 13 mit dem Endabschnitt 12 der Kolbenstange 3 fest verbunden, vorzugsweise verschraubt. Die Ventilfedersitzmuffe sitzt außen auf der Zwischenbuchse 13 und ist vor ihrer Festlegung an dieser axial verschiebbar. Sie weist weiterhin einen radial abstehenden Kragen 14 zur Abstützung der Druckfeder 10 auf.

Bei der Montage des vorstehend erläuterten Dämpferventils 1 wird zunächst der Grundkörper 2 mittels der Zwischenbuchse 13 an der Kolbenstange 3 befestigt. Anschließend werden die Ventilscheiben 7 auf die Zwischenbuchse 13 aufgesteckt. Danach folgt der Ventilteller 9 und daraufhin die Druckfeder 10, bevor schließlich die Ventilfedersitzmuffe aufgeschoben wird.

Selbstverständlich kann vor der Montage des Dämpferventils 1 ein in Gegenrichtung wirkendes Dämpferventil 20 an dem Grundkörper 2 bzw. Kolben montiert werden, wie dies in Figur 1 beispielhaft dargestellt ist. Diesem in Gegenrichtung wirkenden Dämpferventil 20 sind eigene Durchgangsöffnungen 21 in dem Grundkörper 2 zugeordnet, die ihrerseits in ihrer Ruhestellung durch Ventilscheiben 22 verschlossen sind. Die Ventilscheiben 22 sind durch eine konische Schraubenfeder 23 mit einer definierten Vorspannkraft belastet, welche sich gegen eine weitere Schulter der Kolbenstange 3 abstützt.

Das erfindungsgemäße Dämpferventil 1 ist jedoch nicht auf den Einsatz an einem Kolben eines Schwingungsdämpfers beschränkt. Vielmehr ist es auch möglich, dieses Dämpferventil als Bodenventil an einem Schwingungsdämpfer einzusetzen.

In einer kinematischen Umkehrung kann anstelle einer Zwischenbuchse 13 auch ein Zapfen verwendet werden, der durch den Grundkörper 2 hindurchgeführt und mit der Kolbenstange verbunden wird. Möglich ist weiterhin, einen einstückig mit dem Grundkörper ausgebildeten Vorsprung als Ventilführung vorzusehen.

Das vorstehend erläuterte Dämpferventil 1 zeichnet sich durch eine geringe Kennungsvarianz aus. Insbesondere ermöglicht es auf einfache Art und Weise den Aufbau einer definierten Vorspannkraft bei der Montage und deren nachfolgende Beibehaltung in engen Toleranzgrenzen. Die Aufbringung der Vorspannkraft sowie die gesamte Montage sind überdies gut automatisierbar.

### BEZUGSZEICHENLISTE

- 1: Dämpferventil
- 2: Grundkörper
- 3: Kolbenstange
- 4: Verschlußeinrichtung
- 5: Strömungsweg durch den Grundkörper 2
- 6: Befestigungsorgan
- 7: Ventilscheibe(n)
- 8: Ventilsitz
- 9: Ventilteller
- 10: Druckfeder
- 11: Absatz
- 12: Wellenendabschnitt der Kolbenstange 3
- 13: Zwischenbuchse (Ventilführung)
- 14: Kragen
- 15: Klemmschraube
- 20: weiteres Dämpferventil
- 21: Durchgangsöffnung
- 22: Ventilscheibe(n)
- 23: konische Druckfeder

## Patentansprüche

1. Dämpferventil mit definierter Vorspannkraft, umfassend:
- einen Grundkörper (2),
- eine federelastische Verschlusseinrichtung (4), die im Ruhezustand einen Strömungsweg (5) durch den Grundkörper (2) absperrt und bei Anströmung durch ein Strömungsmedium bei einem voreingestellten Druckniveau öffnet, wobei die Verschlusseinrichtung (4) eine oder mehrere Ventilscheiben (7), einen Ventilteller (9) sowie weiterhin eine Druckfeder (10) aufweist, und
- ein Befestigungsorgan (6), das die Verschlusseinrichtung (4) gegen den Grundkörper (2) vorspannt und relativ zu dem Grundkörper (2) festgelegt ist,
**dadurch gekennzeichnet, dass**
- die Ventilscheibe bzw. Ventilscheiben (7) infolge Anliegens eines bestimmten Strömungsdruckniveaus gegen den Ventilteller (9) durchbiegbar und zusammen mit diesem gegen die Kraft der Druckfeder (10) axial parallelverschiebbar sind, und
- das Befestigungsorgan (6) axial mit dem Grundkörper (2) zusammengeschoben und mit einer lösbaren, radial kraftschlüssig wirkenden Verbindung relativ zu dem Grundkörper (2) festgelegt ist.

2. Dämpferventil nach Anspruch 1, **dadurch gekennzeichnet, dass** das Befestigungsorgan (6) als Ventilfedersitzmuffe ausgebildet ist, die einen radial abstehenden Kragen (14) zur Abstützung der Druckfeder (10) aufweist.

3. Dämpferventil nach Anspruch 1 oder 2, **dadurch gekennzeichnet, dass** die Ventilscheibe bzw. Ventilscheiben (7) eine kleinere Federsteifigkeit als die Druckfeder (10) aufweisen, derart, dass zunächst ein Durchbiegen der Ventilscheibe bzw. Ventilscheiben (7) in Richtung des Ventiltellers (9) erfolgt, bevor eine merkliche axiale Parallelverschiebung eintritt.

4. Dämpferventil nach einem der Ansprüche 1 bis 3, **dadurch gekennzeichnet, dass** die Ventilscheibe bzw. Ventilscheiben (7) und der Ventilteller (9) mittels der Druckfeder (10) gegen einen Absatz (11) des Grundkörpers (2) vorgespannt und von diesem Absatz (11) abhebbar sind.

5. Dämpferventil nach einem der Ansprüche 1 bis 4, **dadurch gekennzeichnet, dass** die Ventilscheibe bzw. Ventilscheiben (7) bis zum Anschlag gegen den Ventilteller (9) durchbiegbar sind.

6. Dämpferventil nach einem der Ansprüche 1 bis 5, **dadurch gekennzeichnet, dass** der Ventilteller (9) an einer Ventilführung axial geführt ist.

## Claims

1. Damper valve with a defined prestressing force, comprising:
- a basic body (2),
- a spring-elastic closing device (4) which, in the state of rest, shut off a flow path (5) through the basic body (2) and, when the flow medium impinges on them, open the said flow path at a preset pressure level, the closing device (4) having one or more valve discs (7), a valve plate (9) and also a compression spring (10), and
- a fastening member (6) which prestresses the closing device (4) against the basic body (2) and is secured in relation to the basic body (2),
**characterized in that**,
- as a result of a specific flow-pressure level bearing against the valve plate (9), the valve disc or valve discs (7) can be bent and, together with the latter, can be displaced axially in parallel counter to the force of the compression spring (10), and
- the fastening member (6) is pushed axially together with the basic body (2) and is secured in relation to the basic body (2) by means of a releasable connection having a radially non-positive action.

2. Damper valve according to Claim 1, **characterized in that** the fastening member (6) is designed as a valve-spring seat sleeve which has a radially projecting collar (14) for supporting the compression spring (10).

3. Damper valve according to Claim 1 or 2, **characterized in that** the valve disc or valve discs (7) have a lower spring rigidity than the compression spring (10), in such a way that a bending of the valve disc or valve discs (7) in the direction of the valve plate (9) takes place first, before an appreciable axial parallel displacement occurs.

4. Damper valve according to one of Claims 1 to 3, **characterized in that** the valve disc or valve discs (7) and the valve plate (9) are prestressed against a shoulder (11) of the basic body (2) by means of the compression spring (10) and can be lifted off from this shoulder (11).

5. Damper valve according to one of Claims 1 to 4, **characterized in that** the valve disc or valve discs (7) can be bent up to abutment against the valve plate (9).

6. Damper valve according to one of Claims 1 to 5, **characterized in that** the valve plate (9) is guided axially on a valve guide.

## Revendications

1. Soupape de précontrainte à force de précontrainte définie, comprenant :
- un corps de base (2),
- un dispositif de fermeture à élasticité de ressort (4) qui, à l'état de repos, bloque une voie d'écoulement (5) dans le corps de base (2) et l'ouvre lorsqu'il s'y écoule une substance d'écoulement à un niveau de pression prédéfini, le dispositif de fermeture (4) présentant un ou plusieurs disques de soupape (7), une cuvette de soupape (9) ainsi qu'un ressort de compression (10), et
- un organe de fixation (6) qui précontraint le dispositif de fermeture (4) contre le corps de base (2) et est bloqué par rapport au corps de base (2),
**caractérisée en ce que**
- le disque de soupape ou les disques de soupape (7), à la suite de la présence d'un certain niveau de pression d'écoulement, peuvent être fléchis contre la cuvette de soupape (9) et déplacés en parallèle axialement avec celle-ci à l'encontre de la force du ressort de compression (10), et que
- l'organe de fixation (6) est poussé axialement avec le corps de base (2) et est bloqué par un raccord détachable et agissant radialement par correspondance mécanique par rapport au corps de base (2).

2. Soupape d'amortisseur selon la revendication 1, **caractérisé en ce que** l'organe de fixation (6) est réalisé sous forme d'un manchon à assise élastique de soupape qui présente une collerette (14) proéminente radialement servant à soutenir le ressort de compression (10).

3. Soupape d'amortisseur selon la revendication 1 ou 2, **caractérisé en ce que** le disque de soupape ou les disques de soupape (7) présentent une rigidité à l'élasticité inférieure à celle du ressort de compression (10) et telle qu'il y a d'abord une flexion du disque de ressort ou des disques de ressort (7) en direction de la cuvette de soupape (9) avant que se produise un décalage parallèle axial notable.

4. Soupape d'amortisseur selon une des revendications 1 à 3, **caractérisé en ce que** le disque de soupape ou les disques de soupape (7) et la cuvette de soupape (9) sont précontraints au moyen du ressort de compression (10) contre un talon (11) du corps de base (2) et peuvent être soulevés de ce talon (11).

5. Soupape d'amortisseur selon une des revendications 1 à 4, **caractérisé en ce que** le disque de soupape ou les disques de soupape (7) peuvent être fléchis jusqu'à la butée contre la cuvette de soupape (9).

6. Soupape d'amortisseur selon une des revendications 1 à 5, **caractérisé en ce que** la cuvette de soupape (9) est guidée axialement sur un guide de soupape.
